Europäisches Patentamt

European Patent Office

Office européen des brevets

(11) Veröffentlichungsnummer: **0 337 086**

**A1**

(12) # EUROPÄISCHE PATENTANMELDUNG

(21) Anmeldenummer: **89103029.8**

(22) Anmeldetag: **21.02.89**

(51) Int. Cl.⁴: **G06F 3/16**

(30) Priorität: **10.03.88 DE 3807851**

(43) Veröffentlichungstag der Anmeldung:
**18.10.89 Patentblatt 89/42**

(84) Benannte Vertragsstaaten:
**DE FR GB SE**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Schröder, Günter Grundig E.V.M.**
**Max Grundig holländ. Stiftung & Co KG**
**Kurgartenstrasse 37 D-8510 Fürth/Bay(DE)**
Erfinder: **Abraham, Helmut Grundig E.M.V.**
**Max Grundig holländ. Stiftung & Co KG**
**Kurgartenstrasse 37 D-8510 Fürth/Bay(DE)**
Erfinder: **Arciszewski, Kasimir Grundig E.M.V.**
**Max Grundig holländ. Stiftung & Co KG**
**Kurgartenstrasse 37 D-8510 Fürth/Bay(DE)**

(54) **Rechner, insbesondere Personalcomputer, mit einem Sprachein- und einem Sprachausgabesystem.**

(57) Durch eine besondere Ausbildung eines Rechners, insbesondere eines Personalcomputers, soll die Möglichkeit geschaffen werden, den Rechner wie ein normales Diktiergerät benutzen zu können.

Hierzu verfügt der Rechner über eine Codierschaltung, die geeignet ist, Steuerbefehle, die über die Bedientasten eines an sich bekannten Diktiergerätemikrofons eingebbar sind, in Maschinenworte umzusetzen, über die der Rechner in seinem Schreib-Lese-Speicher (Disketten, Festplatten) Schreib-, Lese-, Lösch-, Korrigier-oder Markiervorgänge auslöst oder beendet.

Verwendung eines Personalcomputers als Diktiergerät.

EP 0 337 086 A1

# RECHNER, INSBESONDERE PERSONALCOMPUTER, MIT EINEM SPRACHEIN- UND EINEM SPRACHAUS-GABESYSTEM

Die Erfindung betrifft einen Rechner, insbesondere einen Personalcomputer, der im Oberbegriff des Anspruchs 1 angegebenen Art.

Personalcomputer besitzen in der Regel aus Disketten und/oder Festplatten bestehende Schreib-Lese-Speicher, deren Aktivierung zum Schreiben, Lesen, Löschen, Korrigieren oder Markieren von Daten über bestimmte mittels Tastatur eingebbare Befehle steuerbar ist. Ferner sind aus der Zeitschrift "Elektronik Praxis, Sonderdruck, April 1986, 20. Jahrgang, Vogel-Verlag Würzburg" Rechner mit einem Sprachein- und einem Sprachausgabesystem bekannt, über das jeweils anwendungsspezifische Texte mittels Mikrofon bzw. Lautsprecher ein- und ausgebbar sind. Hierzu verfügt das mit dem Rechner verbundene Sprachein- und Sprachausgabesystem über Einrichtungen zur Analog-Digital- und Digital-Analog-Wandlung der ein- bzw. auszugebenden Sprachsignale.

Soll nun ein zu sprechender Text akustisch über einen derartigen Rechner auf Diskette oder Festplatte aufgezeichnet werden, so muß der Benutzer die für einen Speicher-, gegebenenfalls Wiedergabe- und Korrigiervorgang notwendigen Befehle für die Steuerung des Speicherwerks (Diskette oder Festplatte) manuell über die Tastatur des Rechners eingeben. Hierzu sind besondere Kenntnisse einer Benutzersprache für die Bedienung des Rechners erforderlich. Daher bleibt die Verwendung eines solchen Rechners z.B. als Diktiergerät nur einem besonders geschulten Personenkreis vorbehalten.

Der Erfindung liegt die Aufgabe zugrunde, einen Rechner, insbesondere einen Personalcomputer, der im Oberbegriff des Anspruchs 1 angegebenen Art so auszubilden, daß er wie ein normales Diktiergerät benutzbar und bedienbar ist, ohne daß bei der bedienenden Person besondere Kenntnisse einer bestimmten Benutzersprache vorhanden sein müssen.

Diese Aufgabe wird gemäß der Erfindung durch die im Kennzeichen des Patentanspruchs 1 angegebenen Merkmale gelöst. Vorteilhafte Weiterbildungen der Erfindung sind in den Unteransprüchen gekennzeichnet.

Der Rechner gemäß der Erfindung verfügt über eine Codierschaltung, die geeignet ist, Steuerbefehle, die über die Bedientasten eines an sich bekannten Diktiergerätemikrofons eingebbar sind, in Maschinenworte umzusetzen, über die der Rechner im Schreib-Lese-Speicher Schreib-, Lese-, Lösch-, Korrigier- oder Markiervorgänge auslöst oder beendet.

In vorteilhafter Weise ist die Codierschaltung dem Rechner baulich zugeordnet und am Rechner eine mit der Codierschaltung sowie dem Sprachein- und Sprachausgabesystem verbundene erste extern zugängliche Schnittstelle vorgesehen, an die unmittelbar das mit Bedientasten für die Diktier- und Wiedergabesteuerung ausgestattete Diktiergerätemikrofon anschließbar ist.

Diktiergerätemikrofone besitzen üblicherweise drei Bedientasten bzw. -schalter, über die durch geeignete Betätigung die Funktionen "Aufnahmebereitschaft", "Start" (für Wiedergabe und Aufnahme), "Stop" (für Wiedergabe und Aufnahme), "Kurzrücklauf" und "Indexmarkierung" steuerbar sind. Durch eine kombinierte Betätigung von Tasten wären aber auch noch andere Funktionen z.B. "Korrekturbegrenzung" denkbar.

Soll nun ein auf Diskette oder Festplatte gespeicherter Text, der akustisch über das Mikrofon eingegeben wurde, von einer anderen Person abgehört und in die Schriftform umgesetzt werden, so ist es von Vorteil, am Rechner eine mit der Codierschaltung verbundene zweite extern zugängliche Schnittstelle sowie eine mit dem Sprachausgabesystem verbundene dritte extern zugängliche Schnittstelle vorzusehen. Hierdurch ergibt sich die Möglichkeit, den als Diktiergerät genutzten Rechner über eine zweite abgesetzte Bedieneinrichtung, vorzugsweise einen Fußschalter, im Wiedergabebetrieb zu steuern, Die über den Fußschalter erzeugbaren Steuerbefehle werden entsprechend den Steuerbefehlen, die über die Bedientasten des Diktiergerätemikrofons eingebbar sind, über die im Rechner angeordnete Codierschaltung in für den Rechner verständliche Maschinenworte umgesetzt und ermöglichen im Wiedergabebetrieb die Steuerung der Funktionen "Start", "Stop" und "Kurzrücklauf". Über die mit dem Sprachausgabesystem verbundene dritte Schnittstelle ist eine Höreinrichtung, insbesondere ein Kopfhörer, anschließbar, über den der zu schreibende Text abgehört werden kann.

Vorzugsweise verfügt der Rechner (Personalcomputer) zusätzlich über ein Textverarbeitungsprogramm, das gleichzeitig neben dem Sprachein- und Sprachausgabesystem nutzbar ist. Hierdurch ergibt sich der Vorteil, daß ein auf Diskette oder Festplatte aufgezeichnetes Diktat über den Rechner abgehört und gleichzeitig über die Tastatur des Rechners geschrieben werden kann.

Die zur Steuerung des Aufnahme-/Wiedergabebetriebs bzw. Wiedergabebetriebs vorgesehen Schnittstellen sind in vorteilhafter Weise noch über eine gegenseitige Verriegelungsanordnung mit der Codierschaltung verbunden, die entweder eine Steuerung des Diktier- oder Wiedergabetriebes über das Diktiergerätemikrofon oder eine Steuerung des Wiedergabebetriebs über die zweite abgesetzte Bedieneinrichtung, vorzugsweise einen Fußschalter zuläßt.

Je nach Ausstattung des Rechners oder Personalcomputers -Anzahl der Disketten bzw. Festplatten, Konzeption als Ein-oder Mehrplatzsystem - ist eine Nutzung als Einfach- oder Zentraldiktieranlage möglich.


**Ansprüche**

1. Rechner, insbesondere Personalcomputer, mit einem aus Disketten und/oder Festplatten bestehenden Schreib-Lese-Speicher, dessen Aktivierung zum Schreiben, Lesen, Lösung, Korrigieren oder Markieren von Daten über bestimmte mittels Tastatur eingebbare Befehle steuerbar ist, sowie mit einem Sprachein- und einem Sprachausgabesystem, über das jeweils anwendungsspezifische Texte mittels Mikrofon bzw. Lautsprecher ein- und ausgebbar sind, wobei das mit dem Rechner verbundene Sprachein- und Sprachausgabesystem Einrichtungen zur Analog-Digital- und Digital-Analog-Wandlung der ein- bzw. auszugebenden Sprachsignale enthält, **dadurch gekennzeichnet**, daß der Rechner über eine Codierschaltung verfügt, die geeignet ist, Steuerbefehle, die über die Bedientasten eines an sich bekannten Diktiergerätemikrofons eingebbar sind, in Maschinenworte umzusetzen, über die der Rechner im Schreib-Lese-Speicher Schreib-, Lese-, Lösch-, Korrigier-oder Markiervorgänge auslöst oder beendet.

2. Rechner nach Anspruch 1, **dadurch gekennzeichnet**, daß die Cdodierschaltung dem Rechner baulich zugeordnet ist, und daß am Rechner eine mit der Codierschaltung sowie dem Sprachein- und Sprachausgabesystem verbundene erste extern zugängliche Schittstelle vorgesehen ist, an die unmittelbar das mit Bedientasten für die Diktier- und Wiedergabesteuerung ausgestattete Diktiergerätemikrofon anschließbar ist.

3. Rechner nach Anspruch 1 oder 2, **dadurch gekennzeichnet**, daß am Rechner eine mit der Codierschaltung verbundene zweite extern zugängliche Schnittstelle und eine mit dem Sprachausgabesystem verbundene dritte extern zugängliche Schnittstelle vorgesehen sind, an die unmittelbar eine zweite abgesetzte Bedieneinrichtung, insbesondere ein Fußschalter, zur Erzeugung von Steuerbefehlen für die Wiedergabesteuerung sowie eine Höreinrichtung, insbesondere ein Kopfhörer, für den Wiedergabebetrieb anschließbar sind.

4. Rechner nach Anspruch 2 oder 3, **dadurch gekennzeichnet**, daß die ersten beiden Schnittstellen über eine gegenseitige Verriegelungsanordnung mit der Codierschaltung verbunden sind, die entweder eine Steuerung des Diktier- oder Wiedergabebetriebes über das Diktiergerätemikrofon oder eine Steuerung des Wiedergabebetriebs über die zweite abgesetzte Bedieneinrichtung zuläßt.

5. Rechner nach einem oder mehreren der Ansprüche 1 bis 4, **dadurch gekennzeichnet**, daß ein Textverarbeitungssytem vorgesehen ist, das gleichzeitig neben dem Sprachein - und Sprachausgabesystem nutzbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 430 726 (BELL TELEPHONE LABORATORIES) <br> * Figuren 1,2; Spalte 4, Zeile 49 - Spalte 6, Zeile 51; Spalte 11, Zeile 15 - Spalte 12, Zeile 11 * | 1 | G 06 F 3/16 |
| A | --- | 2-5 | |
| A | GB-A-2 082 820 (NEFF) <br> * Figuren 2,4-7; Seite 3, Zeilen 45-98; Seite 4, Zeilen 1-65; Seite 5, Zeilen 17-117 * <br> --- | 1-5 | |
| A | GB-A-2 173 375 (DICTAPHONE) <br> * Zusammenfassung; Figuren 1,1A * <br> --- | 1 | |
| A | IBM TECHNICAL DISCLOSURE BULLETIN, Band 22, Nr. 4, September 1979, Seiten 1327-1328, New York, US; H.R. GRUBB: "Dictation system" <br> ----- | 1 | |
| | | | **RECHERCHIERTE SACHGEBIETE (Int. Cl.4)** |
| | | | G 06 F 3/16 <br> H 04 M 11/10 <br> H 04 M 3/50 <br> G 06 F 3/00 |

Der vorliegende Recherchenbericht wurde für alle Patentansprüche erstellt

| Recherchenort | Abschlußdatum der Recherche | Prüfer |
|---|---|---|
| DEN HAAG | 06-07-1989 | MOENS R.A.A. |

EPO FORM 1503 03.82 (P0403)